(19) Europäisches Patentamt
European Patent Office
Office européen des brevets

(11) **EP 2 310 883 B1**

(12) **FASCICULE DE BREVET EUROPEEN**

(45) Date de publication et mention de la délivrance du brevet:
**16.03.2016 Bulletin 2016/11**

(21) Numéro de dépôt: **09740434.7**

(22) Date de dépôt: **04.08.2009**

(51) Int Cl.:
*G02B 1/11* (2015.01)    *G02C 7/02* (2006.01)
*G02B 1/10* (2006.01)    *B32B 7/02* (2006.01)

(86) Numéro de dépôt international:
**PCT/FR2009/051557**

(87) Numéro de publication internationale:
**WO 2010/015780 (11.02.2010 Gazette 2010/06)**

(54) **ARTICLE D'OPTIQUE COMPORTANT UNE COUCHE ANTISTATIQUE LIMITANT LA PERCEPTION DES FRANGES D'INTERFERENCE, PRESENTANT UNE EXCELLENTE TRANSMISSION LUMINEUSE ET SON PROCEDE DE FABRICATION**

OPTISCHER ARTIKEL MIT HERVORRAGENDEN TRANSMISSIONSEIGENSCHAFTEN UND MIT ANTISTATIK-SCHICHT ZUR BEGRENZUNG VON INTERFERENZSÄUMEN, UND SEIN HERSTELLUNGSVERFAHREN

OPTICAL ARTICLE THAT INCLUDES AN ANTISTATIC LAYER LIMITING THE PERCEPTION OF INTERFERENCE FRINGES, HAVING EXCELLENT LIGHT TRANSMISSION, AND METHOD OF MANUFACTURING IT

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **04.08.2008 FR 0855401**

(43) Date de publication de la demande:
**20.04.2011 Bulletin 2011/16**

(73) Titulaire: **Essilor International (Compagnie Générale d'Optique) 94220 Charenton-le-Pont (FR)**

(72) Inventeurs:
• **COUE, Peggy**
  **F-94220 Charenton Le Pont (FR)**
• **FEUILLADE, Mathieu**
  **F-94220 Charenton Le Pont (FR)**
• **WIPF, Elodie**
  **F-94220 Charenton Le Pont (FR)**

(74) Mandataire: **Catherine, Alain et al Cabinet HARLE et PHELIP 14-16, rue Ballu 75009 Paris (FR)**

(56) Documents cités:
**WO-A-03/056366    US-B1- 6 211 274**

**Description**

La présente invention concerne un article d'optique, par exemple une lentille ophtalmique, comprenant un substrat en résine synthétique ou en verre minéral, en particulier ayant un indice de réfraction élevé (1,5 ou plus, préférentiellement 1,55 ou plus), au moins un revêtement de nature polymère et, interposé entre le substrat et ledit revêtement de nature polymère, un revêtement antistatique possédant en outre la faculté de limiter la perception de franges d'interférence dues à la différence d'indice de réfraction entre le substrat et ce revêtement de nature polymère.

Il est classique de former sur les faces principales d'un substrat transparent en résine synthétique ou en verre minéral, telle qu'une lentille ophtalmique, un ou plusieurs revêtements de nature polymère pour conférer à l'article diverses propriétés avantageuses telles que résistance au choc, résistance à l'abrasion, élimination des reflets, etc.

Ainsi, on revêt généralement au moins une face du substrat soit directement avec une couche résistante à l'abrasion, soit avec une couche de primaire, généralement une couche améliorant la résistance au choc de la lentille, sur laquelle on peut déposer une couche résistante à l'abrasion, la couche de primaire améliorant l'ancrage de cette couche résistante à l'abrasion sur la surface du substrat. Finalement, on peut encore déposer sur la couche résistante à l'abrasion d'autres revêtements tels qu'un revêtement antireflet.

A l'heure actuelle, on utilise pour former les couches de primaire et de revêtement résistant à l'abrasion des vernis, c'est à dire des compositions conduisant à une matière en grande partie organique par opposition à des couches de nature essentiellement minérales telles que couches d'oxydes métalliques et/ou d'oxyde de silicium.

En général, le substrat et la couche résistante à l'abrasion ou la couche de primaire ont des indices de réfraction différents et souvent très éloignés et par suite, il apparaît des franges d'interférences dues à cette différence d'indice de réfraction à l'interface entre le substrat et la couche résistante à l'abrasion ou la couche de primaire.

Ce problème d'apparition de franges d'interférences peut être résolu en accordant l'indice de réfraction du substrat et de la couche de revêtement en contact avec lui, ce qui est assez contraignant.

Il a également été proposé dans la demande WO 03/056366 au nom du déposant de résoudre ce problème en interposant entre le substrat et la couche de nature polymère une couche quart d'onde initialement poreuse à base de particules d'oxydes minéraux colloïdaux, dont la porosité a été au moins en partie comblée, généralement totalement ou quasi-totalement comblée, par le matériau constituant la couche polymérique ou le matériau constituant le substrat, lorsque celui-ci est de nature polymère. Cette construction diminue efficacement l'intensité des ranges d'interférences.

Par ailleurs, il est bien connu que les articles d'optique, qui sont composés de matériaux essentiellement isolants, ont tendance à voir leur surface se charger facilement en électricité statique, particulièrement lorsqu'ils sont nettoyés en conditions sèches par frottement de leur surface au moyen d'un chiffon, d'un morceau de mousse synthétique ou de polyester (triboélectricité). Les charges présentes à leur surface créent un champ électrostatique capable d'attirer et de fixer les objets de très faible masse se trouvant à proximité (quelques centimètres), généralement des particules de faibles dimensions telles que des poussières, et ce durant tout le temps où la charge reste sur l'article.

Afin de diminuer ou annuler l'attraction des particules, il est nécessaire de diminuer l'intensité du champ électrostatique, c'est-à-dire de diminuer le nombre de charges statiques présentes à la surface de l'article. Ceci peut être réalisé en rendant les charges mobiles, par exemple en introduisant une couche d'un matériau induisant une forte mobilité des "porteurs de charge", afin de les dissiper rapidement. Les matériaux induisant la plus forte mobilité sont les matériaux conducteurs.

L'état de la technique révèle qu'un article d'optique peut acquérir des propriétés antistatiques grâce à l'incorporation à sa surface, dans l'empilement de revêtements fonctionnels, d'au moins une couche électriquement conductrice, dite "couche antistatique." Cette couche antistatique peut constituer la couche externe de l'empilement de revêtements fonctionnels, une couche intermédiaire (interne) ou être déposée directement sur le substrat de l'article d'optique. La présence d'une telle couche dans un empilement confère à l'article des propriétés antistatiques, même si le revêtement antistatique est intercalé entre deux revêtements ou substrats non antistatiques.

Par "antistatique", on entend la propriété de ne pas retenir et/ou développer une charge électrostatique appréciable. Un article est généralement considéré comme ayant des propriétés antistatiques acceptables, lorsqu'il n'attire et ne fixe pas la poussière et les petites particules après que l'une de ses surfaces a été frottée au moyen d'un chiffon approprié. Il est capable de dissiper rapidement des charges électrostatiques accumulées, alors qu'un article statique qui vient d'être essuyé peut attirer les poussières environnantes pendant tout le temps nécessaire à sa décharge.

La capacité d'un verre à évacuer une charge statique obtenue après frottement par un tissu ou par tout autre procédé de génération d'une charge électrostatique (charge appliquée par corona...) peut être quantifiée par une mesure du temps de dissipation de ladite charge. Ainsi, les verres antistatiques possèdent un temps de décharge de l'ordre de la centaine de millisecondes, alors qu'il est de l'ordre de plusieurs dizaines de secondes pour un verre statique, parfois même plusieurs minutes.

Dans la présente demande, un article d'optique est considéré comme antistatique lorsque son temps de décharge est inférieur à quelques centaines de ms, typiquement < 200 ms, quelle que soit la quantité de charge appliquée (typiquement, pour un test, la charge peut varier de 20 à 50 nanocoulons, ce qui, en général, correspond aux quantités obtenues réellement par effet triboélectrique lors d'un frottement).

Les revêtements antistatiques connus comprennent au moins un agent antistatique, qui est généralement un oxyde métallique (semi-)conducteur éventuellement dopé, tel que l'oxyde d'indium dopé à l'étain (ITO), l'oxyde d'étain dopé à l'antimoine, le pentoxyde de vanadium, ou bien un polymère conducteur à structure conjuguée.

Le brevet US 6,852,406 décrit des articles d'optique, notamment des lentilles ophtalmiques, équipées d'un empilement antireflet de nature minérale comprenant une couche antistatique transparente de nature minérale déposée sous vide, à base d'oxyde d'étain-indium (ITO) ou d'oxyde d'étain. Cette réalisation est relativement contraignante car elle ne permet pas de disposer d'un article d'optique antistatique exempt de revêtement antireflet.

Il est plus avantageux de disposer d'articles d'optique dans lesquels la couche antistatique est indépendante de l'empilement antireflet.

Un certain nombre de demandes de brevets (US 2004/0209007, US 2002/0114960...) décrivent des articles munis d'une couche antistatique à base de polymères conducteurs déposée directement sur le substrat de l'article et indépendante du revêtement antireflet.

La demande japonaise JP 2006-095997 décrit un article d'optique sur lequel sont déposées, dans cet ordre, une couche antistatique de 30 nm à 1 $\mu$m d'épaisseur comprenant des particules conductrices de 50-60 nm de diamètre agglomérées en particules secondaires de taille 0,8-2 $\mu$m (par exemple d'ITO) et une résine, puis une couche dure anti-abrasion. Grâce à un contrôle de la taille des particules conductrices, il est possible d'éliminer les franges d'interférence créées par la différence d'indice de réfraction existant entre la couche antistatique et le substrat. Ce document ne vise donc pas à résoudre le problème de l'apparition de franges d'interférences entre le substrat et le revêtement anti-abrasion au moyen d'une couche intermédiaire quart d'onde.

A ce jour, il n'a donc été décrit aucun revêtement disposant de propriétés antistatiques et simultanément capable d'éliminer les franges d'interférence en utilisant une couche intermédiaire dont l'indice de réfraction est choisi par rapport aux indices de réfraction des matériaux de part et d'autre de ce revêtement, dans le but de réaliser une couche quart d'onde, en particulier en jouant sur le ratio entre un colloïde conducteur et un colloïde à bas indice de réfraction contenus dans la couche antistatique.

La présente invention a donc pour objectif de fournir un article optique, telle qu'une lentille ophtalmique, comprenant un substrat en verre organique ou minéral et au moins une couche de matériau polymère transparent, telle que, par exemple, une couche de primaire ou une couche de revêtement anti-abrasion dans lequel le phénomène de franges d'interférences lié à la différence d'indice de réfraction entre le substrat et la couche de matériau polymère soit notablement atténué, et qui dispose en même temps de propriétés antistatiques.

Plus la différence d'indice (mesurée à 550 nm) entre le substrat et la couché de matériau polymère transparent sera élevée, typiquement d'au moins 0,01, de préférence, au moins 0,02, mieux au moins 0,05, et mieux encore au moins 0,1, plus le problème technique à résoudre sera important.

L'invention a aussi comme objectif de fournir un article d'optique possédant des propriétés antistatiques et un excellent niveau de transmission de la lumière dans le spectre visible.

L'introduction d'une couche antistatique induisant généralement une décroissance de la transmission en raison du pouvoir absorbant de celle-ci, il est effectivement particulièrement intéressant de contrebalancer cette perte de transmission en utilisant une couche quart d'onde antistatique.

L'invention a également pour objectif de fournir un article optique stable dans le temps et en particulier résistant à la photo-dégradation.

La présente invention a encore pour objet un procédé de fabrication d'un article d'optique tel que défini ci-dessus qui s'intègre aisément dans le processus classique de fabrication et qui, en particulier, évite autant que possible la mise en oeuvre de dépôts sous vide ou de toute autre étape de traitement constituant une rupture dans le processus de fabrication de l'article d'optique.

Les buts ci-dessus sont atteints selon l'invention par un article d'optique selon la revendication 1, par exemple une lentille ophtalmique et en particulier un verre de lunette.

La couche intermédiaire, après comblement de sa porosité initiale, vérifie les caractéristiques suivantes :

$$0,725 \times \frac{\lambda}{4n} \leq e \leq 1,35 \times \frac{\lambda}{4n} \qquad (1)$$

$$0,98 \times \sqrt{n_{substrat} \cdot n_{polymère}} \leq n \leq 1,02 \times \sqrt{n_{substrat} \cdot n_{polymère}} \qquad (2)$$

où n est l'indice de réfraction de la couche intermédiaire, $n_{substrat}$ est l'indice de réfraction du substrat, $n_{polymère}$ est l'indice de réfraction de la couche de matériau polymérique directement en contact avec la couche intermédiaire, e est l'épaisseur de la couche intermédiaire et $\lambda$ est égal à 550 nm.

Dans la présente demande et sauf indication contraire, les indices de réfraction s'entendent à 25°C et pour une longueur d'onde de 550 nm, qui est la longueur d'onde correspondant à la sensibilité maximum de l'oeil humain, et à laquelle on souhaite donc principalement parvenir à une extinction des franges d'interférence.

L'atténuation maximale de la perception des franges d'interférences peut se manifester à 550 nm, ou bien à une autre longueur d'onde dans le domaine du visible, suivant les valeurs de n et e retenues dans le calcul des équations (1) et (2) ci-dessus.

Les inventeurs ont constaté que la perception des franges d'interférences était réduite dès lors que l'on utilisait les valeurs de n et e définies dans les équations (1) et (2).

L'invention concerne également un procédé de fabrication d'un article d'optique selon la revendication 16.

Connaissant les indices de réfraction du substrat de la couche de matériau polymérique, les équations (1) et (2) ci-dessus permettent de déterminer les gammes d'épaisseur e et d'indice de réfraction n de la couche intermédiaire selon l'invention.

Comme déjà évoqué ci-dessus, les caractéristiques d'épaisseur et d'indice de réfraction d'une couche intermédiaire selon l'invention peuvent s'écarter des valeurs idéales théoriques d'une couche quart d'onde. On parlera alors dans la présente demande de couche quasi quart d'onde.

Lorsque les équations (1) et (2) ci-dessus sont vérifiées, un effet anti-franges d'interférences satisfaisant est obtenu. De préférence, la couche intermédiaire vérifie l'équation suivante :

$$0{,}8 \times \frac{\lambda}{4n} \leq e \leq 1{,}2 \times \frac{\lambda}{4n} \qquad (1'),$$

et encore mieux :

$$0{,}85 \times \frac{\lambda}{4n} \leq e \leq 1{,}15 \times \frac{\lambda}{4n}$$

$$(1'').$$

En pratique, l'épaisseur de la couche intermédiaire après comblement de sa porosité par le matériau polymère ou le matériau du substrat peut être difficile à mesurer. En première approximation, cette épaisseur peut être considérée comme égale à celle de la couche de particules colloïdales déposée et séchée, puisque son épaisseur varie peu du fait de la diffusion du matériau de remplissage de la couche poreuse.

De préférence, la couche intermédiaire vérifie l'équation suivante :

$$0{,}985 \times \sqrt{n_{substrat} \cdot n_{polymère}} \leq n \leq 1{,}015 \times \sqrt{n_{substrat} \cdot n_{polymère}} \qquad (2'),$$

et encore mieux :

$$0{,}99 \times \sqrt{n_{substrat} \cdot n_{polymère}} \leq n \leq 1{,}01 \times \sqrt{n_{substrat} \cdot n_{polymère}} \qquad (2'')$$

En pratique, l'indice de réfraction de la couche intermédiaire après comblement de sa porosité par le matériau polymère ou le matériau du substrat peut être difficile à mesurer. En première approximation, cet indice de réfraction peut être considéré comme égal à l'indice de réfraction théorique d'une couche intermédiaire dont la porosité aurait été entièrement comblée par le matériau de remplissage. Une méthode de calcul de cet indice de réfraction théorique est indiquée dans la partie expérimentale, où il est noté $n_3$.

Une couche intermédiaire selon l'invention peut également constituer une couche quart d'onde proprement dite à la longueur d'onde de 550 nm. Il s'agit du mode de réalisation préféré. Dans ce cas, son indice de réfraction n et son épaisseur e sont égaux aux indice de réfraction et épaisseur théoriques d'une couche quart d'onde, c'est-à-dire vérifient les relations suivantes : $e = \dfrac{\lambda}{4n}$ et

$$n = \sqrt{n_{substrat} \cdot n_{polymère}}$$

où $\lambda$, $n_{substrat}$ et $n_{polymère}$ ont les mêmes significations que précédemment. En d'autres termes, l'indice de réfraction n de la lame quart d'onde est la moyenne géométrique des indices de réfraction des matériaux l'entourant.

Selon la présente invention, le choix de l'indice de réfraction idéal et le choix de, l'épaisseur idéale pour une couche intermédiaire devant être intercalée entre un substrat et une couche de polymère d'indices de réfraction prédéterminés ne sont donc pas des choix libres, ces deux paramètres étant fixés par les indices de réfraction du substrat et de la couche de polymère. En revanche, la nature des colloïdes constituant la couche est plus libre. Une couche intermédiaire selon l'invention, c'est-à-dire une couche possédant les caractéristiques d'indice de réfraction et d'épaisseur d'une couche quart d'onde ou proches de celles d'une couche quart d'onde et possédant en même temps des propriétés antistatiques suffisantes sera obtenue en choisissant de façon appropriée la nature du ou des colloïdes de particules conductrices et du ou des colloïdes de particules de bas indice de réfraction, ainsi que leurs proportions respectives. L'homme du métier est parfaitement capable de parvenir à une formulation adéquate sans réaliser un nombre excessif d'expériences.

Jusqu'à présent, seules des couches antistatiques minérales comprenant exclusivement des oxydes métalliques conducteurs tels que l'ITO et éventuellement un liant avaient été décrites. Des couches antistatiques comprenant en outre des particules d'oxydes minéraux non conducteurs n'étaient pas connues.

L'homme du métier peut aussi influer sur l'indice de réfraction de la couche intermédiaire en jouant sur la présence d'un liant et sur sa nature, sur le diamètre des particules colloïdales qui a un impact sur la porosité initiale de la couche intermédiaire, ou sur la nature du matériau de comblement de la porosité initiale de la couche intermédiaire de colloïdes, qui peut être soit du matériau de la couche polymérique, soit du matériau du substrat.

Ainsi, lorsque les propriétés antistatiques d'une couche quart d'onde ou quasi quart d'onde obtenue à partir d'un mélange donné de particules conductrices et de particules de bas indice de réfraction sont insuffisantes, l'homme du métier peut sans difficulté préparer une couche ayant une épaisseur et un indice de réfraction similaires en augmentant la proportion de particules conductrices par rapport aux particules de bas indice de réfraction, sans modifier la nature des particules conductrices, mais en remplaçant les particules de bas indice de réfraction par d'autres particules possédant un indice de réfraction inférieur.

Tout en restant dans la gamme d'épaisseur autorisée par l'invention, c'est-à-dire la gamme de l'équation (1) encadrant l'épaisseur théorique d'une couche quart d'onde à 550 nm, il est également généralement possible d'augmenter l'épaisseur de la couche intermédiaire afin d'accroître ses propriétés antistatiques.

Lorsque les propriétés antistatiques d'une couche obtenue à partir d'un mélange donné de particules conductrices et de particules de bas indice de réfraction sont satisfaisantes, mais que cette couche possède un indice de réfraction trop élevé pour exercer un effet anti-franges et entrer dans le cadre de l'invention, l'homme du métier peut préparer une couche quart d'onde ou quasi quart d'onde en remplaçant les particules de bas indice de réfraction par d'autres particules possédant un indice de réfraction inférieur.

Il est en effet plus commode d'ajuster ou de réguler l'indice de réfraction de la couche intermédiaire en modifiant la nature des particules de bas indice de réfraction, les particules conductrices ayant généralement un indice de réfraction compris dans une gamme restreinte de l'ordre de 1,9 à 2.

Il peut donc être avantageux dans certains cas d'utiliser des particules colloïdales, en particulier d'oxyde minéral colloïdal de bas indice de réfraction creuses, du type présentant une structure core/shell (coeur/écorce), le coeur de la particule étant vide de matière (empli d'air) ou poreuses, du type présentant un réseau de pores de faibles dimensions par rapport à la taille de la particule, qui offrent une large gamme de choix d'indice de réfraction puisque celui-ci peut généralement varier de 1,15 à 1,45. Ces particules ont un indice de réfraction plus faible que les mêmes particules non creuses ou non poreuses du fait que l'air contenu dans le volume creux ou dans les pores de ces particules a un indice de réfraction plus faible que le matériau les constituant. Elles seront décrites en détail plus tard.

La couche intermédiaire peut être formée sur un substrat en verre organique ou minéral, de préférence en verre organique, telle qu'une lentille ophtalmique préformée. C'est alors un matériau polymérique qui assure le comblement de la porosité de la couche intermédiaire. Un tel procédé peut mettre en jeu le transfert ou l'application d'un ou plusieurs revêtements sur le substrat revêtu de la couche intermédiaire poreuse.

Elle peut également être formée sur une partie de moule dont une surface principale de moulage est revêtue d'au moins un revêtement constituant la couche de matériau polymérique, de préférence optiquement transparent. Selon ce mode de réalisation, le substrat est en verre organique (c'est-à-dire de nature polymère) et peut être formé in situ lors du transfert par coulée d'une composition polymérisable liquide dans le moule comportant sur une de ses surfaces le revêtement constituant la couche de matériau polymérique revêtue de la couche intermédiaire poreuse, suivi d'une polymérisation. C'est alors le matériau du substrat qui assure le comblement de la porosité de la couche intermédiaire.

Pour une description détaillée des différentes techniques permettant de préparer une couche intermédiaire conforme à l'invention par comblement de sa porosité initiale au moyen d'un matériau polymérique, on pourra se référer à la description de la demande WO 03/056366 au nom du déposant et à ses figures 5 à 7.

Les substrats convenant pour les articles selon la présente invention peuvent être tout substrat optiquement transparent en verre minéral ou organique, de préférence en verre organique.

Parmi les matières plastiques convenant pour les substrats on peut citer les homo et copolymères de carbonate, (méth)acryliques, thio(méth)acryliques, de diéthylène glycol bisallylcarbonate tel que le matériau CR39® commercialisé par PPG, d'uréthane, de thiouréthane, d'époxyde, d'épisulfure et leur combinaisons.

Les matériaux préférés pour les substrats sont les polycarbonates (PC), les polyuréthanes (PU), les polythiouréthanes, les polymères (méth)acryliques et thio(méth)acryliques.

Généralement, les substrats ont un indice de réfraction variant de 1,55 à 1,80 et de préférence de 1,60 à 1,75.

Lorsque la composition de couche intermédiaire doit être déposée sur un substrat déjà formé, la surface du substrat nu en verre organique ou minéral, par exemple une lentille ophtalmique, peut au préalable être traitée par trempage dans une solution de soude à 5 % à chaud, par exemple à 50°C (3 minutes), puis rincée à l'eau et à l'isopropanol.

Selon l'invention, la couche intermédiaire est obtenue à partir d'une composition de couche intermédiaire comprenant des particules colloïdales d'au moins un oxyde minéral colloïdal ayant un indice de réfraction inférieur ou égal à 1,55, de particules colloïdales d'au moins un oxyde métallique colloïdal électriquement conducteur, et optionnellement un liant.

L'utilisation d'une certaine quantité de particules colloïdales ayant un indice de réfraction inférieur ou égal à 1,55 est nécessaire, puisque l'indice de réfraction d'une couche composée uniquement de particules d'oxydes métalliques conducteurs, d'indice de réfraction proche de 2, dont la porosité a été comblée par un matériau, est nécessairement plus élevé que celui du matériau lui-même. Une telle couche ne pourrait donc pas être utilisée en tant que couche quart d'onde ou quasi quart d'onde.

L'obtention de particules colloïdales utilise des techniques bien connues. Par colloïdes, on entend de fines particules dont le diamètre (ou la plus grande dimension) est inférieur à 1 $\mu$m, de préférence inférieur à 150 nm, mieux inférieur à 100 nm, dispersées dans un milieu dispersant tel que l'eau, un alcool, une cétone, un ester ou leurs mélanges, de préférence un alcool tel que l'éthanol ou l'isopropanol. Des gammes de tailles de particules colloïdales préférées sont les gammes 10 à 80 nm, 30 à 80 nm et 30 à 60 nm.

En particulier, les particules colloïdales, préférentiellement d'oxyde minéral colloïdal peuvent être constituées d'un mélange de particules de petite taille, par exemple de 10 à 15 nm et de particules de plus grande taille, par exemple de 30 à 80 nm.

Les particules colloïdales peuvent également être des fluorures de bas indice de réfraction tels que $MgF_2$, $ZrF_4$, $AlF_3$, chiolite ($Na_3[Al_3F_{14}]$), cryolite ($Na_3[AlF_6]$).

Dans le reste de la description, les particules colloïdales, en particulier les particules d"oxyde minéral colloïdal ayant un indice de réfraction inférieur ou égal à 1,55, de préférence inférieur ou égal à 1,50, seront couramment nommées, respectivement particules colloïdales de bas indice de réfraction et oxyde minéral colloïdal "de bas indice de réfraction." Leur indice de réfraction est de préférence supérieur ou égal à 1,15.

Les particules colloïdales d'oxyde de bas indice de réfraction peuvent être, sans limitation, des particules de silice, de silice dopée avec de l'alumine, des particules d'oxyde minéral dites creuses ou poreuses, comme expliqué plus haut, ou leurs mélanges. Généralement, ce sont des particules non électriquement conductrices.

Comme exemples de silices colloïdales utilisables, on peut citer les silices préparées par le procédé Stöber. Le procédé Stöber est un procédé simple et bien connu qui consiste en une hydrolyse et condensation du tétrasilicate d'éthyle $Si(OC_2H_5)_4$ dans l'éthanol catalysée par de l'ammoniac. Le procédé permet d'obtenir une silice directement dans l'éthanol, une population de particules quasi monodisperses, une taille de particules réglable et une surface de particules ($SiO^-NH_4^+$). Des colloïdes de silice sont également commercialisés par DuPont De Nemours sous le nom LUDOX®.

Les particules d'oxyde minéral dites creuses ou poreuses, leur utilisation en optique et leur mode de préparation ont été largement décrits dans la littérature, notamment dans les demandes de brevet WO 2006/095469, JP 2001-233611, WO 00/37359, JP2003-222703. De telles particules sont également disponibles commercialement auprès de la société Catalysts & Chemicals Industries Co. (CCIC), par exemple sous la forme de sols de silice poreuse sous la référence THRULYA®.

Ces particules peuvent être modifiées par greffage d'un groupe organique, notamment sur un atome de silicium, ou bien peuvent être des particules composites de plusieurs oxydes minéraux.

Dans la présente invention, les particules d'oxyde minéral colloïdal de bas indice de réfraction préférées sont des particules creuses ou poreuses possédant de préférence un indice de réfraction allant de 1,15 à 1,40, mieux de 1,20 à 1,40, et un diamètre allant préférentiellement de 20 à 150 nm, mieux de 30 à 100 nm. Ce sont préférentiellement des particules de silice creuses.

Par oxyde métallique électriquement conducteur, on entend un oxyde métallique conducteur ou semi-conducteur, éventuellement dopé. Les oxydes métalliques électriquement conducteurs possèdent généralement un haut indice de réfraction, de l'ordre de 1,9 à 2,0.

Des exemples non-limitatifs d'oxydes métalliques électriquement conducteurs sont l'oxyde d'indium dopé à l'étain (ITO), l'oxyde d'étain dopé à l'antimoine (ATO), l'oxyde de zinc dopé à l'aluminium, l'oxyde d'étain ($SnO_2$), l'oxyde de zinc (ZnO), l'oxyde d'indium ($In_2O_3$), le pentoxyde de vanadium, l'oxyde d'antimoine, l'oxyde de cérium, l'antimonate de zinc, l'antimonate d'indium. Ces deux derniers composés et leur procédé d'obtention sont décrits dans le brevet US 6,211,274.

L'oxyde d'indium dopé à l'étain et l'oxyde d'étain sont préférés. Selon un mode de réalisation optimal, la couche intermédiaire ne comprend qu'un seul oxyde métallique électriquement conducteur, l'oxyde d'indium dopé à l'étain (ITO).

La composition de couche intermédiaire peut comprendre d'autres catégories de particules colloïdales, notamment des particules non électriquement conductrices d'indice de réfraction supérieur à 1,55, à condition que leur présence n'empêche pas l'obtention de propriétés antistatiques et de l'effet anti-franges d'interférences. Des exemples non limitatifs de telles particules sont $TiO_2$, $ZrO_2$, $Sb_2O_3$, $Al_2O_3$, $Y_2O_3$, $Ta_2O_5$ et leurs mélanges. Des composites tels que $SiO_2/TiO_2$, $SiO_2/ZrO_2$, $SiO_2/TiO_2/ZrO_2$, ou $TiO_2/SiO_2/ZrO_2/SnO_2$ peuvent également être employés.

De préférence, la composition de couche intermédiaire comprend un mélange binaire d'un oxyde de bas indice de réfraction et d'un oxyde électriquement conducteur.

Selon la présente invention, la masse de particules d'oxydes métalliques colloïdaux électriquement conducteurs représente de 50 à 97 %, de préférence 55 à 95%, mieux de 60 à 95% et mieux encore de 60 à 90% de la masse totale de particules colloïdales, préférentiellement d'oxydes colloïdaux présents dans la couche intermédiaire. De préférence, ces proportions sont également vérifiées par la composition de couche intermédiaire. De telles teneurs en particules électriquement conductrices sont destinées à assurer des propriétés antistatiques suffisantes à la couche intermédiaire, qui doit atteindre le seuil de conductivité.

La composition de couche intermédiaire peut éventuellement contenir au moins un liant, en une quantité telle qu'avant comblement de la porosité initiale de la couche de colloïdes déposée et séchée, cette couche poreuse comprend préférentiellement de 1 à 30 % en masse de liants par rapport à la masse totale (sèche) de particules colloïdales présentes dans cette couche, mieux de 10 à 25 % et encore mieux 10 à 20 %.

Le liant est généralement un matériau polymère qui ne nuit pas aux propriétés optiques de la couche intermédiaire finale et qui accroît la cohésion et l'adhérence des particules d'oxydes à la surface du substrat. Il peut être formé à partir d'un matériau thermoplastique ou thermodurcissable, éventuellement réticulable par polycondensation, polyaddition ou hydrolyse. Des mélanges de liants appartenant à différentes catégories peuvent également être employés.

Des exemples de liants utilisables sont donnés dans la demande WO 2008/015364, au nom du déposant. Parmi ceux-ci, on peut citer plus précisément les résines polyuréthane, époxy, mélamine, polyoléfine, uréthane acrylate, époxyacrylate, et ceux obtenus à partir de monomères tels que les monomères méthacrylate, acrylate, époxy, et vinyl. Les liants préférés sont de nature organique, notamment les latex de polyuréthane et les latex (méth)acryliques, tout particulièrement les latex de polyuréthane.

Selon un mode de réalisation particulier de l'invention, la composition de revêtement intermédiaire ne comprend pas de liant.

De préférence, la masse de l'extrait sec de la composition de couche intermédiaire représente moins de 15 % de la masse totale de cette composition, mieux moins de 10 % et encore mieux moins de 5%.

L'épaisseur d'une couche intermédiaire selon l'invention varie généralement de 50 à 130 nm, de préférence de 60 à 130 nm, mieux de 75 à 110 nm, et mieux encore de 80 à 100 nm, cette épaisseur devant bien entendu être en accord avec la gamme de l'équation (1) et permettre l'obtention de propriétés antistatiques. Cette épaisseur est l'épaisseur obtenue après comblement de la porosité initiale de la couche intermédiaire, et est généralement pratiquement identique à l'épaisseur avant comblement.

Généralement, une augmentation de l'épaisseur de la couche intermédiaire, c'est-à-dire une augmentation de la quantité de particules conductrices déposées, accroît ses propriétés antistatiques.

Bien entendu, l'épaisseur d'une couche intermédiaire doit être aussi proche que possible de l'épaisseur théorique d'une lame quart d'onde, compte tenu des matériaux utilisés pour l'article d'optique, pour un résultat optimal d'atténuation des franges d'interférence.

Généralement, la porosité initiale de la couche intermédiaire, en l'absence de liant, est d'au moins 20 % en volume, par rapport au volume total de la couche intermédiaire, et de préférence d'au moins 30 % en volume, mieux d'au moins 40 % en volume. Cette porosité (avant comblement) correspond à la porosité obtenue après dépôt et séchage de la composition de couche intermédiaire.

Par porosité initiale, on entend la porosité générée de façon inhérente par l'empilement des particules colloïdales d'oxydes de la couche de composition intermédiaire déposée et séchée. Cette porosité initiale est une porosité ouverte, accessible, qui est la seule à pouvoir être comblée par le matériau polymérique ou le matériau du substrat. Dans le cas où des oxydes colloïdaux creux sont employés dans la composition de couche intermédiaire, la porosité initiale ne comprend donc pas les pores de ces oxydes creux, inaccessibles au matériau polymérique ou au matériau du substrat.

Lorsque la couche intermédiaire comprend un liant, la porosité initiale de cette couche est la porosité restante en tenant compte du volume occupé par le liant, mais avant comblement par le matériau de remplissage constitué par le matériau de la couche ultérieure ou du substrat. Elle est de préférence d'au moins 20 %, mieux d'au moins 30 % en volume par rapport au volume total de la couche intermédiaire.

La composition de couche intermédiaire colloïdale est de préférence déposée sur le substrat ou, selon le cas, sur la couche de matériau polymérique, par trempage. Elle peut aussi être déposée par centrifugation. Typiquement, le support sur lequel est réalisé le dépôt est trempé dans la composition de couche intermédiaire liquide, l'épaisseur déposée étant fonction de la teneur en matière sèche du sol, de la taille des particules et de la vitesse de démouillage (Loi de Landau-Levich).

Ainsi, connaissant la composition de revêtement, la taille des particules, les indices de réfraction du substrat et du revêtement de nature polymérique, on peut déterminer l'épaisseur voulue pour la couche intermédiaire et la vitesse de démouillage convenant pour l'obtention de l'épaisseur voulue.

Après séchage de la couche déposée, on obtient une couche d'oxydes colloïdaux poreuse d'épaisseur voulue. Le séchage de la couche peut être effectué à une température variant de 20 à 130 °C, préférentiellement 20°C-120°C, mieux à température ambiante (20-25°C).

La couche de matériau polymérique, utilisée dans la présente invention a de préférence une énergie de surface supérieure ou égale à 20 milliJoules/m$^2$, mieux supérieure ou égale à 25 milliJoules/m$^2$ et encore mieux supérieure ou égale à 30 milliJoules/m$^2$.

L'énergie de surface est calculée selon la méthode Owens-Wendt décrite dans la référence suivante : « Estimation of the surface force energy of polymers » Owens D.K., Wendt R.G. (1969), J. APPL. POLYM. SCI., 13, 1741-1747.

Le matériau polymérique est principalement décrit dans le cadre du mode de réalisation dans lequel il est utilisé en tant que matériau de comblement de la porosité de la couche intermédiaire. Toutefois, la description qui suit vaut également dans le cas où le matériau du substrat est utilisé en tant que matériau de comblement.

La composition conduisant au matériau polymérique de comblement comprend majoritairement un (ou des) composé(s) non fluoré(s).

De préférence, la composition conduisant au matériau polymérique de comblement comprend au moins 80 % en masse de composés non fluorés par rapport à la masse totale des composés formant l'extrait sec de ladite composition, mieux au moins 90 % en masse, encore mieux au moins 95 % en masse et tout préférentiellement 100 % en masse. Par extrait sec, on entend selon la présente invention les matières solides restantes après évaporation des solvants sous vide jusqu'à 100 °C.

Typiquement, le taux de fluor dans le matériau polymérique de comblement est inférieur à 5 % en masse, de préférence inférieur à 1% en masse et mieux de 0 % en masse.

La porosité (en volume) de la couche intermédiaire après comblement est préférentiellement inférieure à l'une des valeurs suivantes : 20 %, 10 %, 5 %, 3 %, et encore mieux, est nulle (0 %). Comme pour la porosité initiale définie plus haut, la porosité après comblement ne tient par exemple pas compte de la porosité "fermée" des particules colloïdales creuses d'oxydes éventuellement employées. Ainsi, une couche intermédiaire dont la porosité initiale a été entièrement comblée possédera au sens de l'invention une porosité nulle, même si elle comprend des particules creuses d'oxydes colloïdaux.

Le matériau de comblement utilisé dans la présente demande peut être sous forme de monomères, d'oligomères, de polymères ou de leurs mélanges.

Après comblement, le matériau de comblement vient en contact avec la surface du substrat (lorsque le matériau de comblement n'est pas celui du substrat mais celui d'une autre couche telle qu'une couche de primaire ou une couche anti-abrasion) et permet d'obtenir l'adhérence de la couche intermédiaire sur le substrat.

La couche de matériau polymérique assurant le comblement de la porosité initiale de la couche intermédiaire est généralement formée par dépôt au trempé ou par centrifugation, de préférence par trempé.

La couche de matériau polymérique en contact direct avec la couche intermédiaire est préférentiellement une couche de matériau transparent. Il peut s'agir d'une couche d'un matériau fonctionnel, par exemple une couche d'un revêtement de primaire d'adhésion et/ou antichoc, une couche d'un revêtement anti-abrasion et/ou anti-rayure ou une couche d'un revêtement antireflet. Il peut également s'agir d'une couche de composition adhésive. La couche de matériau polymérique, selon l'invention est préférentiellement une couche de primaire.

Cette couche de primaire peut être toute couche de primaire classiquement utilisé dans le domaine optique et en particulier ophtalmique.

Typiquement, ces primaires, en particulier les primaires antichoc, sont des revêtements à base de polymère (méth)acryliques, de polyuréthanes, de polyester, ou encore à base de copolymères époxy/(méth)acrylate.

Les revêtements antichoc à base de polymère (méth)acrylique sont, entre autres, décrits dans les brevets US 5,015,523 et US 5,619,288, cependant que des revêtements à base de résines de polyuréthane thermoplastiques et réticulées sont décrits, entre autres, dans les brevets japonais 63-1417001 et 63-87223, le brevet européen EP-040411 et le brevet US-5,316,791.

En particulier, le revêtement de primaire résistant au choc de l'invention peut être réalisé à partir d'un latex poly(méth)acrylique, y compris de type coque-noyau (core-shell) tel que décrit, par exemple, dans la demande de brevet français FR 2.790.317, d'un latex de polyuréthane ou d'un latex de polyester.

Parmi les compositions de revêtement de primaire antichoc particulièrement préférées, on peut citer le latex acrylique commercialisé sous la dénomination A-639 par Zeneca et les latex de polyuréthane commercialisés sous les dénominations W-240 et W-234 par la Société Baxenden.

On choisira de préférence des latex avant une taille de particule $\leq$ 50 nm et mieux $\leq$ 20nm.

Généralement, après durcissement, la couche de primaire résistant au choc a une épaisseur de 0,05 à 20 $\mu$m, de préférence de 0,5 à 10 $\mu$m et mieux encore de 0,6 à 6 $\mu$m. L'épaisseur optimale est généralement de 0,5 à 2 $\mu$m.

Le revêtement anti-abrasion utilisable dans la présente invention peut être tout revêtement anti-abrasion classiquement utilisé dans le domaine de l'optique et en particulier de l'optique ophtalmique.

Par définition, un revêtement anti-abrasion est un revêtement qui améliore la résistance à l'abrasion de l'article d'optique fini comparé au même article ne comportant pas le revêtement anti-abrasion.

Les revêtements anti-abrasion préférés sont ceux obtenus par durcissement d'une composition renfermant un ou plusieurs alcoxysilane(s) (préférentiellement un ou plusieurs époxyalcoxysilane(s)) ou un hydrolysat de ceux-ci, et préférentiellement une charge colloïdale minérale, telle qu'une charge d'oxyde colloïdal.

Selon un aspect particulier, les revêtements anti-abrasion préférés sont ceux obtenus par durcissement d'une composition incluant un ou plusieurs époxyalcoxysilanes ou un hydrolysat de ceux-ci, de la silice et un catalyseur de durcissement. Des exemples de telles compositions sont décrits dans la demande internationale WO 94/10230 et les brevets US 4,211,823, 5,015,523, ainsi que le brevet européen EP 614957.

Les compositions de revêtement anti-abrasion particulièrement préférés sont celles comprenant comme constituants principaux un époxyalcoxysilane tel que, par exemple, le $\gamma$-glycidoxypropyltriméthoxysilane (GLYMO), un dialkyldialcoxysilane tel que, par exemple, le diméthyldiéthoxysilane (DMDES), de la silice colloïdale et une quantité catalytique d'un catalyseur de durcissement tel que l'acétylacétonate d'aluminium ou un hydrolysat de ces constituants, le reste de la composition étant essentiellement constitué de solvants classiquement utilisés pour formuler ces compositions et éventuellement d'un ou plusieurs agents tensio-actifs.

Pour améliorer l'adhérence du revêtement anti-abrasion, la composition de revêtement anti-abrasion peut éventuellement comporter une quantité effective d'un agent de couplage, en particulier lorsque le substrat revêtu est fabriqué par la technique de coulée dans le moule (In Mold Casting ou IMC).

Cet agent de couplage est typiquement une solution pré-condensée d'un époxyalcoxysilane et d'un alcoxysilane insaturé, de préférence comprenant une double liaison éthylénique terminale. Ces composés sont décrits en détail dans la demande WO 03/056366 au nom du déposant. Typiquement, la quantité d'agent de couplage introduite dans la composition de revêtement anti-abrasion représente 0,1 à 15 % par rapport à la masse totale de la composition, de préférence 1 à 10 % en masse.

L'épaisseur du revêtement, anti-abrasion, après durcissement, est habituellement de 1 à 15 $\mu$m, de préférence de 2 à 6 $\mu$m.

Les compositions de matériau polymérique telles que les compositions de primaire antichoc et de revêtement anti-abrasion peuvent être durcies thermiquement et/ou par irradiation, de préférence thermiquement.

Bien évidemment comme indiqué précédemment, le matériau de la couche de primaire ou de la couche de revêtement anti-abrasion doit pénétrer et combler au moins partiellement la porosité de la couche intermédiaire, lorsque ce matériau est utilisé en tant que matériau de comblement.

L'article d'optique selon l'invention peut comporter éventuellement un revêtement antireflet formé de préférence sur la couche de revêtement anti-abrasion.

Le revêtement antireflet peut être tout revêtement antireflet classiquement utilisé dans le domaine de l'optique, en particulier de l'optique ophtalmique.

A titre d'exemple, le revêtement antireflet peut être constitué d'un film mono- ou multicouche, de matériaux diélectriques tels que SiO, $SiO_2$, $Si_3N_4$, $TiO_2$, $ZrO_2$, $Al_2O_3$, $MgF_2$ ou $Ta_2O_5$, ou leurs mélanges. Il devient ainsi possible d'empêcher l'apparition d'une réflexion à l'interface lentille-air.

Ce revêtement antireflet est appliqué généralement par dépôt sous vide, notamment par évaporation, éventuellement assistée par faisceau ionique, par pulvérisation par faisceau d'ion, par pulvérisation cathodique ou par dépôt chimique en phase vapeur assisté par plasma.

Outre le dépôt sous vide, on peut aussi envisager un dépôt d'une couche minérale par voie humide, par exemple par voie sol-gel en utilisant une composition liquide contenant un hydrolysat de silanes et des matériaux colloïdaux de haut (> 1,55) ou de bas ($\leq$ 1,55) indice de réfraction. Un tel revêtement dont les couches comprennent une matrice hybride organique/inorganique à base de silanes dans laquelle sont dispersés des matériaux colloïdaux permettant d'ajuster l'indice de réfraction de chaque couche sont décrits par exemple dans le brevet FR 2858420. Cette catégorie de composition peut être employée pour former la couche de matériau polymérique au sens de l'invention, et notamment en tant que matériau de comblement de la porosité initiale de la couche intermédiaire.

Dans le cas où le revêtement antireflet comprend une seule couche, son épaisseur optique est de préférence égale à λ/4 (λ est une longueur d'onde comprise entre 450 et 650 nm).

Dans le cas d'un film multicouche comportant trois couches, on peut utiliser une combinaison correspondant à des épaisseurs optiques respectives λ/4, λ/2, λ/4 ou λ/4, λ/4, λ/4. On peut en outre utiliser un film équivalent formé par plus de couches, à la place d'un nombre quelconque des couches faisant partie des trois couches précitées.

Quelques modes de réalisation particuliers du procédé selon l'invention vont maintenant être décrits.

La couche de matériau polymérique venant combler la porosité initiale de la couche intermédiaire peut être une couche de composition adhésive. Ce mode de réalisation, qui est décrit en détail dans la demande WO 03/056366 au nom du déposant, en particulier sur la figure 6 de cette demande, peut être adapté à la présente invention. Il sera simplement résumé ici.

Selon ce mode de réalisation, un article d'optique comportant une couche antistatique et anti-franges d'interférences est obtenu par transfert d'un revêtement ou d'un empilement de revêtements sur une préforme ou un substrat revêtu d'une couche colloïdale poreuse séchée conforme à l'invention, qui contient éventuellement un liant.

Sur une surface d'un moule (ou support) préférentiellement flexible, on forme un empilement monocouche ou multicouche, par exemple, dans cet ordre, un revêtement antireflet, une couche de revêtement dur anti-abrasion et/ou anti-rayures, et une couche de primaire. De préférence, les couches de revêtement antireflet, anti-abrasion et/ou anti-rayures et de primaire sont séchées et/ou durcies, au moins partiellement.

On place alors une quantité adéquate d'un matériau adhésif, soit sur la couche intermédiaire poreuse, soit sur la surface externe de l'empilement multicouche, c'est à dire la couche de primaire dans l'exemple ci-dessus, mais de préférence sur la couche intermédiaire poreuse, puis on presse le substrat portant la couche intermédiaire poreuse contre l'ensemble du revêtement monocouche ou multicouche porté par le moule. L'adhésif peut aussi être injecté entre la couche intermédiaire et l'empilement porté par le moule.

Après durcissement de l'adhésif, on retire le moule pour obtenir un article d'optique selon l'invention.

Dans ce mode de réalisation, la porosité initiale de la couche intermédiaire est comblée par la composition adhésive qui constitue la couche de matériau polymérique en contact direct avec la couche intermédiaire. Cette couche d'adhésif assure l'adhérence de l'empilement monocouche ou multicouche avec la couche intermédiaire, elle-même en liaison avec le substrat.

De préférence, l'adhésif est un matériau organique durcissable par irradiation, par exemple par irradiation avec un rayonnement UV. Il peut éventuellement présenter des propriétés antichoc. Des exemples de tels matériaux sont décrits dans le brevet US 5,619,288

La couche intermédiaire selon l'invention ainsi formée limite ou élimine les franges d'interférence, tout particulièrement lorsque la différence d'indice de réfraction entre le substrat et le matériau constituant l'adhésif est élevée.

Selon un autre mode de réalisation de l'invention, le comblement de la porosité initiale de la couche intermédiaire est assuré par le matériau du substrat. Ce mode de réalisation, qui est décrit en détail dans la demande WO 03/056366 au nom du déposant, en particulier sur la figure 7 de cette demande, peut être adapté à la présente invention. Il sera simplement résumé ici et fait préférentiellement intervenir un procédé de type In Mold Coating (IMC).

Sur une surface appropriée d'une première partie de moule d'un moule en deux parties classique pour la fabrication d'une lentille ophtalmique, on forme un empilement monocouche ou multicouche, par exemple, dans cet ordre, un revêtement antisalissure, un revêtement antireflet, une couche de revêtement dur anti-abrasion et/ou anti-rayures, et une couche de primaire. Puis, sur la surface externe de l'empilement multicouche, c'est à dire la couche de primaire dans l'exemple ci-dessus, on forme de préférence par dépôt par centrifugation ou au trempé, une couche intermédiaire d'oxydes colloïdaux d'épaisseur et de porosité requises conforme à l'invention.

Après assemblage des deux parties du moule au moyen d'un joint adhésif, on injecte dans la cavité du moule une composition de monomères liquides qui, après durcissement, formera le substrat. Un article d'optique selon l'invention est obtenu après démoulage.

Préférentiellement, l'article d'optique de l'invention n'absorbe pas dans le visible ou absorbe peu dans le visible, ce qui signifie, au sens de la présente demande, que son facteur relatif de transmission de la lumière dans le visible (Tv) est supérieur à 85 %, mieux supérieur à 90 % et encore mieux supérieur à 91 %. La partie expérimentale montre que cette caractéristique de transparence est obtenue en dépit de la présence de particules métalliques conductrices dans la couche intermédiaire, en choisissant une épaisseur et une teneur en ces particules adéquates.

Le facteur Tv répond à une définition internationale normalisée (norme ISO13666 : 1998) et est mesuré conformément à la norme ISO8980-3. Il est défini dans la gamme de longueur d'onde allant de 380 à 780 nm.

Les exemples suivants illustrent l'invention de façon plus détaillée mais non limitative.

Partie expérimentale

1) Méthodes

a) Evaluation du temps de décharge

Les temps de décharge des articles d'optique ont été mesurés à température ambiante (25 °C) au moyen d'un appareil de mesure de temps de décharge JCI 155 (John Chubb Instrumentation) en suivant les spécifications du constructeur, après avoir soumis lesdits articles d'optique à une décharge corona de -9000 volts pendant 30 ms.

Au cours de ces expériences de mesure de la charge et de la décharge de la surface d'un verre soumis à une décharge corona, les deux paramètres suivants ont été déterminés : la tension maximale mesurée à la surface du verre, notée $U_{max}$, et le temps pour atteindre $1/e = 36{,}7\%$ de la tension maximale, qui correspond au temps de décharge.

La puissance des verres utilisés doit être rigoureusement la même afin de pouvoir comparer la performance des différents verres, car les valeurs mesurées par l'appareil dépendent de la géométrie des verres.

Dans le cadre de cette demande de brevet, par définition, un verre est considéré comme antistatique si son temps de décharge est inférieur à 200 millisecondes.

b) Evaluation du niveau de franges

L'évaluation du niveau de franges d'interférence est visuelle.

Les lentilles ophtalmiques sont typiquement de puissance -4.00.

L'observation des lentilles ophtalmiques est réalisée en réflexion sous éclairage Waldman.

Les lentilles doivent être orientées de telle façon que les franges soient perpendiculaires au tube fluorescent.

La comparaison est effectuée avec comme lentille de référence, une lentille identique excepté que la lentille ne comporte pas de couche anti-franges selon l'invention. (Voir table 4).

c) Réflexion

Des mesures de réflexion Rm et Rv définis dans les normes ISO 13666- 98 et mesurés conformément à la norme ISO8980-4 ont été réalisés sur la face convexe des lentilles -4,00 (mesure sur une seule face).

Pour chaque épaisseur de couche antistatique, les mesures sont effectuées sur trois lentilles. Sur chaque lentille, deux mesures sont effectuées à 15 mm du bord de la lentille.

Les résultats sont la moyenne de ces mesures.

2) Matériaux utilisés

Les colloïdes utilisés sont les suivants :

a) Colloïde d'ITO fourni par CCIC : ELCOM NE-1001ITV® (20 % massique). Les particules d'ITO ont un indice de réfraction de 1,95 et une densité de 8,7.

b) Colloïde de silice fourni par DUPONT de NEMOURS : LUDOX® CL-P (40 % massique). Les particules de silice ont un indice de réfraction de 1,48 et une densité de 2,4.

c) Colloïde de $SiO_2$ creuse fourni par CCIC : Thrulya-200W (20 % massique). Cette suspension est de préférence filtrée à 5 microns avant utilisation. Les particules de silice creuse ont un indice de réfraction de 1,35 et une densité de 1,2.

3) Préparation des compositions de couche intermédiaire

Les trois compositions de couche intermédiaire suivantes ont été préparées :

| Constituant | Composition 1 | Composition 2 | Composition 3 |
|---|---|---|---|
| Colloïde $SiO_2$ | 14,4 g | 19,2 g | - |
| Colloïde $SiO_2$ creuse | - | - | 14,4 g |
| Colloïde ITO | 67,2 g | 57,6 g | 67,2 g |
| Ethanol | 518,4 g | 523,2 g | 518,4 g |

(suite)

| Constituant | Composition 1 | Composition 2 | Composition 3 |
|---|---|---|---|
| Total | 600 g | 600 g | 600 g |
| Extrait sec (teneur massique) | 3,2 % | 3,2 % | 2,8 % |
| Ratio massique ITO/SiO$_2$ (*) | 70/30 | 60/40 | 82/18 |
| (*) Particules sèches. | | | |

Tout d'abord, le colloïde de silice ou de silice creuse a été mélangé à une partie de l'éthanol durant 20 minutes, puis le colloïde d'ITO a été ajouté ainsi que la quantité restante d'éthanol. Le mélange a été de nouveau agité pendant 20 minutes. Les compositions obtenues n'ont pas été filtrées et sont conservées au réfrigérateur. Les différents constituants ont été mélangés alors qu'ils étaient à la même température.

4) Mode opératoire général de préparation des verres antistatiques et anti-franges

Il est préférable de réaliser le dépôt des compositions de couche intermédiaire après leur préparation. Lorsque celles-ci sont stockées, une séparation de phases peut se produire. Dans ce cas, avant de procéder au dépôt, il est nécessaire d'agiter les compositions durant 30 minutes afin de retrouver l'homogénéité. Afin d'obtenir un dépôt de meilleure qualité, il est recommandé de travailler dans un environnement dont le taux d'humidité est régulé.

Les trois compositions de couche intermédiaire ont été déposées par trempage à différentes vitesses, allant de 0,78 mm/s (4,7 cm/mn) jusqu'à une vitesse maximale de 4,75 mm/s (28,5 cm/mn). Pour une même composition de couche intermédiaire, une vitesse de dépôt élevée conduit à une couche plus épaisse et plus poreuse. Sans vouloir donner d'interprétation limitative à l'invention, les inventeurs pensent qu'une vitesse de démouillage lente engendre un empilement de colloïdes plus compact, ceux-ci disposant de plus de temps pour s'empiler avant l'évaporation du solvant.

Les dépôts ont été effectués sur la face convexe et sur la face concave par trempé de substrats (lentilles ophtalmiques) de polythiouréthane thermodurcissable, matériaux commercialisé par MITSUI ayant un indice de réfraction de 1,6 (exemple 3) ou 1,67 (exemples 1, 2), préalablement lavés. Chaque dépôt a été réalisé sur une série de 6 lentilles (3 lentilles +4,00 et 3 lentilles -4,00).

Les lentilles ont ensuite été séchées à l'air ambiant et à température ambiante pendant 4 minutes. L'épaisseur et l'indice de réfraction de la couche de colloïdes déposée et séchée (couche poreuse) ont été déterminés au SMR (Système de Mesure de Réflexion) et les valeurs mesurées sont consignées dans les tableaux ci-dessous.

Après refroidissement et séchage, la couche de colloïdes est revêtue par trempé d'une couche de primaire antichoc à base d'un latex polyuréthane contenant des motifs polyester (Witcobond®. 234 de BAXENDEN CHEMICALS). Ladite couche est pré-polymérisée 15 min à 75°C, conduisant à un revêtement d'indice de réfraction égal à 1,50. Bien qu'un léger gonflement de la couche intermédiaire à base de colloïdes puisse se produire, il a été observé que son épaisseur variait peu du fait de la diffusion du latex Witcobond® 234.

Enfin, le revêtement anti-abrasion et anti-rayures (hard coat) divulgué dans l'exemple 3 du brevet EP 0614957 (d'indice de réfraction égal à 1,50), à base d'un hydrolysat de GLYMO et DMDES, de silice colloïdale et d'acétylacétonate d'aluminium, est déposé par trempé sur le revêtement de primaire, puis prépolymérisé à 75°C pendant 15 minutes. Enfin, l'empilement complet subit une polymérisation pendant 3 heures à 100 °C.

Le temps de décharge de la face convexe revêtue et la transmission de l'article d'optique final ont été mesurés. Les résultats sont consignés dans les tableaux ci-dessous, les articles non-conformes à l'invention étant signalés par des lignes grisées.

5) Exemples 1 et 2

La couche intermédiaire est formée entre un substrat d'indice de réfraction égal à 1,67 et un revêtement de primaire d'indice de réfraction égal à 1,50. Les caractéristiques théoriques d'une couche quart d'onde sont donc les suivantes :

$$n = \sqrt{1,67 \times 1,5} = 1,5827 \; ; \; e = \frac{550}{4 \times 1,5847} = 86,9nm$$

Résultats de l'exemple 1 (composition de couche intermédiaire 1)

**Tableau 1**

| Couche de colloïdes séchée, avant diffusion du latex | | | Couche intermédiaire (après comblement de la porosité par le primaire) | Propriétés de l'article d'optique | | |
|---|---|---|---|---|---|---|
| Epaisseur (nm) | Indice de réfraction $n_1$ | Porosité calculée | Indice de réfraction théorique | Transmission (%) | Rv/Rm (1 face) (%) | Temps de décharge (ms) / Niveau franges |
| 60,4 | 1,49 | 0,26 | 1,62 | 91,1 | 3,85/3,88 | 9010 / NE |
| 63,9 | 1,409 | 0,38 | 1,60 | 91,2 | 3,80/3,84 | 151 / NE |
| **78,8** | **1,365** | **0,45** | **1,59** | **91,2** | **3,39/3,40** | **25 / — —** |
| 92,4 | 1,35 | 0,47 | 1,58 | 91,6 | 3,60/3,63 | 28 / — |
| 106 | 1,344 | 0,48 | 1,58 | 91,2 | 3,40/3,43 | 29 / — |

&minus; :    niveau faible par rapport à la référence (Ref2)

&minus;&minus; :    niveau très faible par rapport à la référence (Ref2)

NE :    non évalué

La porosité initiale p de la couche de colloïdes séchée qui apparaît dans les tableaux 1-3 a été calculée à partir de la valeur de l'indice de réfraction de cette couche poreuse ($n_1$, valeur mesurée avec le SMR) et de l'indice de réfraction moyen du squelette de cette couche ($n_2$, valeur calculée pour un matériau supposé dense, c'est-à-dire sans porosité accessible) au moyen de la formule suivante (approximation linéaire) :

$$n_1 = p + n_2 \times (1-p)$$

L'indice de réfraction moyen $n_2$ du squelette de la couche de colloïdes poreuse est calculé au moyen de la formule suivante, valable dans le cas d'un squelette binaire $SiO_2$/ITO :

$$n_2 = \frac{X_m^{SiO_2} \times \rho^{ITO} \times n_{SiO_2}}{\rho^{SiO_2} + X_m^{SiO_2} \times (\rho^{ITO} - \rho^{SiO_2})} + \frac{X_m^{ITO} \times \rho^{SiO_2} \times n_{ITO}}{\rho^{ITO} + X_m^{ITO} \times (\rho^{SiO_2} - \rho^{ITO})}$$

dans laquelle $X_m^{SiO2}$ représente la proportion massique de particules de silice par rapport à la masse totale de particules de la couche poreuse, $X_m^{ITO}$ la proportion massique de particules d'ITO par rapport à la masse totale de particules de la couche poreuse (ici $X_m^{SiO2} + X_m^{ITO} = 1$), $\rho^{SiO2}$ la densité des particules de silice, $\rho^{ITO}$ la densité des particules d'ITO, $n_{SiO2}$ l'indice de réfraction des particules de silice, $n_{ITO}$ l'indice de réfraction des particules d'ITO.

L'indice de réfraction théorique $n_3$ de la couche intermédiaire correspond à l'indice de réfraction de cette couche en supposant que sa porosité a été entièrement comblée par le matériau de la composition de primaire antichoc. Il est calculé au moyen de la formule suivante (approximation linéaire) :

$$n_3 = p \times n_{primaire} + n_2 \times (1-p)$$

où p (porosité avant comblement) et $n_2$ ont la même signification que précédemment et $n_{primaire}$ est l'indice de réfraction de la couche de primaire (1,5).

Dans ce calcul, on considère que le comblement ne s'effectue pas dans les colloïdes creux ou poreux (porosité des colloïdes non accessible au matériau de comblement).

Résultats de l'exemple 2 (composition de couche intermédiaire 2)

## Tableau 2

| Couche de colloïdes séchée, avant diffusion du latex | | | Couche intermédiaire (après comblement de la porosité par le primaire) | Propriétés de l'article d'optique | | | |
|---|---|---|---|---|---|---|---|
| Epaisseur (nm) | Indice de réfraction $n_1$ | Porosité calculée | Indice de réfraction théorique | Transmission (%) | Rv/Rm (%)(1face) | Temps de décharge (ms) | Niveau franges |
| 52 | 1,493 | 0,20 | 1,594 | 91,6 | 3,88/3,9 | 27250 | NE |
| 61 | 1,403 | 0,35 | 1,577 | 91,2 | 3,82/3,84 | 7255 | NE |
| **75** | **1,383** | **0,38** | **1,573** | **91,6** | **3,78/3,8** | **164** | _ |
| 111,5 | 1,34 | 0,45 | 1,565 | 91,6 | 3,82/3,88 | 175 | NE |
| 115,2 | 1,344 | 0,44 | 1,565 | 91,1 | 4,0/4,0 | 112 | |

_ _ : niveau faible par rapport à la référence (Ref2)

_ : niveau très faible par rapport à la référence (Ref2)

NE : non évalué

6) Exemple 3

La couche intermédiaire est formée entre un substrat d'indice de réfraction égal à 1,6 et un revêtement de primaire d'indice de réfraction égal à 1,50. Les caractéristiques théoriques d'une couche quart d'onde sont donc les suivantes :

$$n = \sqrt{1,6 \times 1,5} = 1,5492 \ ; \ e = \frac{550}{4 \times 1,5492} = 88,76 nm$$

Résultats de l'exemple 3 (composition de couche intermédiaire 3)

## Tableau 3

| Couche de colloïdes séchée, avant diffusion du latex | | | Couche intermédiaire (après comblement de la porosité par le primaire) | Propriétés de l'article d'optique | | | |
|---|---|---|---|---|---|---|---|
| Epaisseur (nm) | Indice de réfraction $n_1$ | Porosité calculée | Indice de réfraction théorique | Transmission (%) | Rv/Rm (%) (1 face) | Temps de décharge (ms) | Niveau franges |
| 52,2 | 1,484 | 0,17 | 1,570 | 92 | 3,86/3,88 | 24500 | – |
| 52,9 | 1,465 | 0,20 | 1,567 | 92,3 | 3,91/3,93 | 2809 | NE |
| **65** | **1,45** | **0,23** | **1,565** | **92,2** | **3,81/3,83** | **27** | -- |
| 97,6 | 1,364 | 0,38 | 1,553 | 91,8 | 3,82/3,88 | 24 | -- |
| 100 | 1,371 | 0,37 | 1,554 | 92,2 | 4,0/4,0 | 64 | NE |

_ : niveau faible par rapport à la référence (Ref1)

_ _ : niveau très faible par rapport à la référence (Ref1)

NE : non évalué

7) Exemples comparatifs

Les propriétés de verres identiques à ceux préparés dans les exemples 1-3 mais dépourvus de couche intermédiaire entre le substrat et le revêtement de primaire ont également été évaluées. Deux séries ont été préparées, selon l'indice de réfraction du substrat (1,67 : exemple comparatif 1 ; 1,6 : exemple comparatif 2).

Résultats des exemples comparatifs (pas de couche intermédiaire)

## Tableau 4

| | Réflexion Rm (par face) (%) | Temps de décharge (ms) | Niveau des franges |
|---|---|---|---|
| Lentille Ref1 (telle que préparé en 4) (Substrat d'indice 1,6 +primaire d'indice 1,5 +vernis hard coat d'indice 1,5) | 4,5 | >30000 | Très élevé |
| Lentille Ref2 telle que préparée en 4) (substrat d'indice 1,67 + primaire d'indice 1,5+ vernis hard coat d'indice 1,5) | 4 | >30000 | Très élevé |

Commentaire des résultats obtenus

Les tableaux 1 à 3 fournissent plusieurs exemples d'articles d'optique possédant une couche intermédiaire présentant en même temps des propriétés antistatiques (temps de décharge inférieur à 200 ms) et permettant de limiter de façon nette la perception des franges d'interférences.

Une comparaison avec les essais comparatifs, qui mettent en jeu des empilements dépourvus de couche .intermédiaire selon l'invention, révèle que l'intensité des franges d'interférences est significativement réduite grâce à la présence de cette couche.

Dans les tableaux 1-3, les essais conduisant au niveau de franges minimal sont signalés en gras. Il apparaît logiquement que les meilleurs résultats en termes de diminution de la perception des franges d'interférence sont obtenus pour les couches intermédiaires présentant les caractéristiques d'épaisseur et d'indice de réfraction les plus proches des caractéristiques théoriques d'une couche quart d'onde.

Les transmissions obtenues sont systématiquement supérieures à 91%, et en moyenne supérieures à 91,5%.

Pour des lentilles d'indice de réfraction de 1, 6 à 1, 67, avec un revêtement d'indice de réfraction de l'ordre de 1,50, les niveaux de réflexion Rm des lentilles selon l'invention peuvent diminuer d'une valeur maximale d'environ 0,6 % par face, soit une amélioration (diminution) de la réflexion d'environ 1,2% pour les deux faces, permettant un gain en transmission de près de 1,2% par rapport à la même lentille ne possédant pas la couche quart d'onde.

Il est à noter qu'une couche intermédiaire antistatique quart d'onde ou quasi quart d'onde ne peut pas être obtenue dans le cas du système de l'exemple 3 (substrat d'indice de réfraction 1,6 / primaire d'indice de réfraction 1,5) en utilisant un mélange $SiO_2$/ITO. En effet, les couches quart d'onde ou quasi quart d'onde résultant de l'utilisation de ce système de colloïdes ne possèdent pas de propriétés antistatiques suffisantes, au contraire des couches quart d'onde ou quasi quart d'onde résultant de l'utilisation du système de colloïdes $SiO_2$ creusé/ITO.

Enfin, les essais effectués révèlent que pour une composition de couché intermédiaire donnée, les temps de décharges peuvent être divisés par 1000 lorsque l'épaisseur de la couche intermédiaire est multipliée par 2 et que dans le même temps la porosité de la couche est également multipliée par 2 (cf. Tableau 3). Un calcul permet de montrer que la quantité de particules d'ITO effectivement déposée a été augmentée d'environ 50 % entre le premier et le dernier essai du Tableau 3.

**Revendications**

1. Article d'optique comprenant un substrat en verre organique ou minéral, une couche d'un matériau polymérique, et une couche intermédiaire possédant des propriétés antistatiques en contact direct avec une face principale du substrat et la couche de matériau polymérique, **caractérisé en ce que** la couche intermédiaire comprenant un mélange de particules colloïdales d'au moins un oxyde métallique colloïdale électriquement conducteur, de particules colloïdales d'oxydes minéraux non conducteurs ayant un indice de réfraction inférieur ou égal à 1,55 et optionnellement d'un liant, dans des proportions telles que la masse de particules d'oxydes métalliques colloïdaux électriquement conducteurs représente 50 à 97 % de la masse totale de particules colloïdales présentes dans la couche intermédiaire, ladite couche intermédiaire étant une couche initialement poreuse dont la porosité a été comblée soit par du matériau de la couche de matériau polymérique soit par du matériau du substrat si celui-ci est en verre organique, de sorte que la couche intermédiaire, après comblement de sa porosité initiale, vérifie les caractéristiques suivantes :

$$0{,}725 \times \frac{\lambda}{4n} \le e \le 1{,}35 \times \frac{\lambda}{4n} \qquad (1)$$

$$0{,}98 \times \sqrt{n_{substrat} \cdot n_{polymère}} \le n \le 1{,}02 \times \sqrt{n_{substrat} \cdot n_{polymère}} \qquad (2)$$

où n est l'indice de réfraction de la couche intermédiaire, $n_{substrat}$ est l'indice de réfraction du substrat, $n_{polymère}$ est l'indice de réfraction de la couche de matériau polymérique directement en contact avec la couche intermédiaire, e est l'épaisseur de la couche intermédiaire et $\lambda$ est égal à 550 nm.

2. Article d'optique selon la revendication 1, **caractérisé en ce que** la masse de particules d'oxydes métalliques colloïdaux électriquement conducteurs représente 50 à 95 %, mieux 60 à 95%, et mieux encore 60 à 90% de la masse totale de particules colloïdales présentes dans la couche intermédiaire.

3. Article d'optique selon la revendication 1 ou 2, **caractérisé en ce qu'**il comprend une couche intermédiaire vérifiant l'équation :

$$0{,}8 \times \frac{\lambda}{4n} \le e \le 1{,}2 \times \frac{\lambda}{4n} \qquad (1')$$

**4.** Article d'optique selon l'une quelconque des revendications précédentes, **caractérisé en ce qu'**il comprend une couche intermédiaire vérifiant l'équation :

$$0,985 \times \sqrt{n_{substrat} \cdot n_{polymère}} \le n \le 1,015 \times \sqrt{n_{substrat} \cdot n_{polymère}} \qquad (2')$$

**5.** Article d'optique selon l'une quelconque des revendications précédentes, **caractérisé en ce qu'**il comprend une couche intermédiaire ayant une porosité inférieure à 20 % en volume, de préférence inférieure à 10 % en volume, mieux inférieure à 5 % en volume.

**6.** Article d'optique selon l'une quelconque des revendications précédentes, **caractérisé en ce qu'**il comprend une couche intermédiaire dont.l'épaisseur varie de 60 à 130 nm, de préférence de 75 à 110 nm, mieux de 80 à 100 nm.

**7.** Article d'optique selon l'une quelconque des revendications précédentes, **caractérisé en ce que** la taille des particules colloïdales, varie de 10 à 80 nm, de préférence de 30 à 80 nm, mieux de 30 à 60 nm.

**8.** Article d'optique selon l'une quelconque des revendications précédentes, **caractérisé en ce que** l'oxyde métallique colloïdal électriquement conducteur est choisi parmi l'oxyde d'indium dopé à l'étain, l'oxyde d'étain dopé à l'antimoine, l'oxyde d'étain, l'oxyde dé zinc, l'oxyde d'indium, le pentoxyde de vanadium, l'oxyde de zinc dopé à l'aluminium, l'oxyde de cérium, l'antimonate de zinc, l'antimonate d'indium et l'oxyde d'antimoine.

**9.** Article d'optique selon l'une quelconque des revendications précédentes, **caractérisé en ce que** l'oxyde minéral colloïdal ayant un indice de réfraction inférieur ou égal à 1,55 est choisi parmi la silice, la silice dopée à l'alumine et les oxydes minéraux poreux ou creux.

**10.** Article d'optique selon la revendication 9, **caractérisé en ce que** l'oxyde minéral colloïdal ayant un indice de réfraction inférieur ou égal à 1,55 est un oxyde minéral poreux ou creux ayant un indice de réfraction allant de 1,15 à 1,40.

**11.** Article d'optique selon l'une quelconque des revendications précédentes, **caractérisé en ce qu'**il possède un facteur relatif de transmission de la lumière dans le visible (Tv) supérieur à 85 %, mieux supérieur à 90 % et encore mieux supérieur à 91 %.

**12.** Article d'optique selon l'une quelconque des revendications précédentes, **caractérisé en ce que** la couche de matériau polymérique en contact direct avec la couche intermédiaire est choisie parmi une couche d'un revêtement de primaire d'adhésion et/ou antichoc, une couche d'un revêtement anti-abrasion et/ou anti-rayure, une couche d'un revêtement antireflet et une couche de composition adhésive.

**13.** Article d'optique selon l'une quelconque des revendications 1 à 11, **caractérisé en ce que** la porosité de la couche intermédiaire est comblée par le matériau polymérique d'une couche d'un revêtement de primaire d'adhésion et/ou antichoc

**14.** Article d'optique selon l'une quelconque des revendications précédentes, **caractérisé en ce que** le substrat est une lentille ophtalmique.

**15.** Article d'optique selon l'une quelconque des revendications précédentes, **caractérisé en ce que** la différence d'indice de réfraction entre le substrat et la couche de matériau polymérique est supérieure ou égale à 0,01, de préférence supérieure ou égale à 0,02, mieux supérieure ou égale à 0,05, et mieux encore supérieure ou égale à 0,1.

**16.** Procédé de fabrication d'un article d'optique selon l'une quelconque des revendications 1 à 15, comprenant :

a) le dépôt d'une couche de composition de couche intermédiaire soit sur au moins une surface principale d'un substrat en verre organique ou minéral, soit sur une couche d'un matériau polymérique, ladite composition comprenant un mélange de particules colloïdales d'au moins un oxyde métallique colloïdal électriquement conducteur, de particules colloïdales d'oxydes minéraux, non conducteurs ayant un indice de réfraction inférieur ou égal à 1,55 et optionnellement d'un liant ;
b) le séchage de la composition de couche intermédiaire de façon à former une couche intermédiaire initialement poreuse ;

c) la formation sur cette couche intermédiaire poreuse soit d'une couche d'un matériau polymérique, soit d'un substrat en verre organique, de façon à ce que la porosité initiale de la couche intermédiaire soit comblée soit par du matériau de la couche polymérique, soit par du matériau du substrat si celui-ci est en verre organique, et de sorte que la couche intermédiaire, après comblement de sa porosité initiale, vérifie les équations (1) et (2) de la revendication 1,

d) la récupération d'un article d'optique comprenant une couche intermédiaire possédant des propriétés antistatiques en contact direct avec une face principale du substrat et la couche de matériau polymérique, la masse de particules d'oxydes métalliques colloïdaux électriquement conducteurs représentant 50 à 97 % de la masse totale de particules colloïdales présentes dans la couche intermédiaire.

**17.** Procédé selon la revendication 16, **caractérisé en ce que** la couche obtenue à l'étape b) possède une porosité d'au moins 20 % en volume, de préférence d'au moins 30 % en volume.

**18.** Procédé selon l'une quelconque des revendications 16 ou 17, **caractérisé en ce que** la couche de composition de couche intermédiaire est déposée sur au moins une surface principale d'un substrat en verre organique ou minéral au cours de l'étape a) et **en ce qu'**une couche d'un matériau polymérique est formée sur la couche intermédiaire poreuse par dépôt au trempé ou par centrifugation au cours de l'étape c).

**Patentansprüche**

**1.** Optischer Gegenstand, der ein Substrat aus Kunststoff- oder Mineralglas, eine Schicht eines polymerartigen Materials und eine Zwischenschicht umfasst, wobei letztere antistatische Eigenschaften besitzt und in unmittelbarem Kontakt mit einer Hauptseite des Substrats und mit der Schicht aus polymerartigem Material ist, **dadurch gekennzeichnet, dass** die Zwischenschicht eine Mischung aus kolloidalen Partikeln mindestens eines kolloidalen Metalloxids, das elektrisch leitfähig ist, aus kolloidalen Partikeln nicht leitfähiger mineralischer Oxide mit einem Brechungsindex von höchstens 1,55 und möglicherweise aus einem Bindemittel umfasst, wobei die Anteile derart sind, dass die Masse an elektrisch leitfähigen kolloidalen Metalloxidpartikeln 50 % bis 97 % der Gesamtmasse an kolloidalen Partikeln ausmacht, die in der Zwischenschicht vorliegen, wobei die Zwischenschicht eine ursprünglich poröse Schicht ist, deren Porenvolumen entweder vom Material der Schicht aus polymerartigem Material oder vom Material des Substrat, sofern dieses aus Kunststoffglas ist, derart ausgefüllt worden ist, dass die Zwischenschicht nach dem Ausfüllen ihres ursprünglichen Porenvolumens den folgenden Kennwerten genügt:

$$0{,}725 \times \frac{\lambda}{4n} \le e \le 1{,}35 \times \frac{\lambda}{4n} \qquad (1)$$

$$0{,}98 \times \sqrt{n_{substrat} \cdot n_{polymer}} \le n \le 1{,}02 \times \sqrt{n_{substrat} \cdot n_{polymer}} \qquad (2)$$

wobei n der Brechungsindex der Zwischenschicht ist, $n_{substrat}$ der Brechungsindex des Substrats ist, $n_{polymer}$ der Brechungsindex der Schicht aus polymerartigem Material ist, welche unmittelbar mit der Zwischenschicht ist Kontakt ist, e die Dicke der Zwischenschicht ist und $\lambda$ gleich 550 nm ist.

**2.** Optischer Gegenstand nach Anspruch 1, **dadurch gekennzeichnet, dass** die Masse an elektrisch leitfähigen kolloidalen Metalloxidpartikeln 50 bis 95 %, besser 60 bis 95 %, und noch besser 60 bis 90 %, der Gesamtmasse an kolloidalen Partikeln ausmacht, die in der Zwischenschicht vorliegen.

**3.** Optischer Gegenstand nach Anspruch 1 oder 2, **dadurch gekennzeichnet, dass** er eine Zwischenschicht umfasst, die der folgenden Gleichung entspricht:

$$0{,}8 \times \frac{\lambda}{4n} \le e \le 1{,}2 \times \frac{\lambda}{4n} \qquad (1')$$

4. Optischer Gegenstand nach einem beliebigen der vorhergehenden Ansprüche, **dadurch gekennzeichnet, dass** er eine Zwischenschicht umfasst, die der folgenden Gleichung entspricht:

$$0{,}985 \times \sqrt{n_{substrat} \cdot n_{polymer}} \leq n \leq 1{,}015 \times \sqrt{n_{substrat} \cdot n_{polymer}} \qquad (2')$$

5. Optischer Gegenstand nach einem beliebigen der vorhergehenden Ansprüche, **dadurch gekennzeichnet, dass** er eine Zwischenschicht mit einem Porenvolumen umfasst, das weniger als 20 Volumen-%, vorzugsweise weniger als 10 Volumen-%, besser weniger als 5 Volumen-%, entspricht.

6. Optischer Gegenstand nach einem beliebigen der vorhergehenden Ansprüche, **dadurch gekennzeichnet, dass** er eine Zwischenschicht umfasst, deren Dicke im Bereich von 60 bis 130 nm, vorzugsweise von 75 bis 110 nm, besser von 80 bis 100 nm, variiert.

7. Optischer Gegenstand nach einem beliebigen der vorhergehenden Ansprüche, **dadurch gekennzeichnet, dass** die Größe der kolloidalen Partikel im Bereich von 10 bis 80 nm, vorzugsweise von 30 bis 80 nm, besser von 30 bis 60 nm, variiert.

8. Optischer Gegenstand nach einem beliebigen der vorhergehenden Ansprüche, **dadurch gekennzeichnet, dass** das elektrisch leitfähige kolloidale Metalloxid aus Indiumoxid, welches mit Zinn dotiert ist, Zinnoxid, welches mit Antimon dotiert ist, Zinnoxid, Zinkoxid, Indiumoxid, Vanadiumpentoxid, Zinkoxid, welches mit Aluminium dotiert ist, Ceroxid, Zinkantimonat, Indiumantimonat und Antimonoxid ausgewählt ist.

9. Optischer Gegenstand nach einem beliebigen der vorhergehenden Ansprüche, **dadurch gekennzeichnet, dass** das kolloidale mineralische Oxid mit einem Brechungsindex von höchstens 1,55 aus Siliciumdioxid, Siliciumdioxid, welches mit Aluminiumoxid dotiert ist, sowie porösen oder hohlen mineralischen Oxiden ausgewählt ist.

10. Optischer Gegenstand nach Anspruch 9, **dadurch gekennzeichnet, dass** es sich bei dem kolloidalen mineralischen Oxid mit einem Brechungsindex von höchstens 1,55 um ein poröses oder hohles mineralisches Oxid mit einem Brechungsindex im Bereich von 1,15 bis 1,40 handelt.

11. Optischer Gegenstand nach einem beliebigen der vorhergehenden Ansprüche, **dadurch gekennzeichnet, dass** er im sichtbaren Bereich (Tv) eine relative Lichtdurchlässigkeit von mehr als 85 %, besser von mehr als 90 %, und noch besser von mehr als 91 %, besitzt.

12. Optischer Gegenstand nach einem beliebigen der vorhergehenden Ansprüche, **dadurch gekennzeichnet, dass** die Schicht aus polymerartigem Material, welche unmittelbar mit der Zwischenschicht in Kontakt ist, aus einer Schicht, die einer Beschichtung mit haftvermittelnder und/oder stoßdämpfender Wirkung entspricht, einer Schicht, die einer Beschichtung entspricht, welche vor Abrieb und/oder Verkratzen schützt, einer Schicht, die einer Antireflexbeschichtung entspricht, und einer Schicht aus einer Haftzusammensetzung ausgewählt ist.

13. Optischer Gegenstand nach einem beliebigen der Ansprüche 1 bis 11, **dadurch gekennzeichnet, dass** das Porenvolumen der Zwischenschicht durch das polymerartige Material einer Schicht ausgefüllt wird, die einer Beschichtung mit haftvermittelnder und/oder stoßdämpfender Wirkung entspricht.

14. Optischer Gegenstand nach einem beliebigen der vorhergehenden Ansprüche, **dadurch gekennzeichnet, dass** es sich bei dem Substrat um eine augenoptische Linse handelt.

15. Optischer Gegenstand nach einem beliebigen der vorhergehenden Ansprüche, **dadurch gekennzeichnet, dass** der Unterschied des Brechungsindexes zwischen dem Substrat und der Schicht aus polymerartigem Material mindestens 0,01, vorzugsweise mindestens 0,02, besser mindestens 0,05, und noch besser mindestens 0,1, beträgt.

16. Verfahren zur Herstellung eines optischen Gegenstands nach einem der Ansprüche 1 bis 15, das Folgendes umfasst:

a) Aufbringen einer Schicht aus einer Zwischenschichtzusammensetzung entweder auf mindestens eine Hauptfläche eines Substrats aus Kunststoff- oder Mineralglas oder auf eine Schicht eines polymerartigen Materials, wobei die Zusammensetzung mindestens eine Mischung aus kolloidalen Partikeln mindestens eines elektrisch leifähigen kolloidalen Metalloxids, aus kolloidalen Partikeln nicht leitfähiger Mineraloxide mit einem Brechungsindex von höchstens 1,55 und möglicherweise aus einem Bindemittel umfasst;

b) Trocknen der Zwischenschichtzusammensetzung, sodass sich eine ursprünglich poröse Zwischenschicht bildet;

c) Bilden, auf dieser porösen Zwischenschicht, entweder einer Schicht aus einem polymerartigen Material oder eines Substrat aus Kunststoffglas, derart, dass das ursprüngliche Porenvolumen der Zwischenschicht entweder vom Material der polymerartigen Schicht oder vom Material des Substrats, sofern dieses aus Kunststoffglas ist, ausgefüllt wird, und derart, dass die Zwischenschicht, nachdem ihr ursprüngliches Porenvolumen ausgefüllt wurde, den Gleichungen (1) und (2) des Anspruchs 1 genügt,

d) Erhalten eines optischen Gegenstands, der eine Zwischenschicht umfasst, welche antistatische Eigenschaften besitzt und in unmittelbarem Kontakt mit einer Hauptseite des Substrats und mit der Schicht aus polymerartigem Material ist, wobei die Masse an Partikeln aus elektrisch leitfähigen kolloidalen Metalloxiden 50 bis 97 % der Gesamtmasse an kolloidalen Partikeln ausmacht, die in der Zwischenschicht vorliegen.

17. Verfahren nach Anspruch 16, **dadurch gekennzeichnet, dass** die Schicht, welche in Schritt b) erhalten wurden, ein Porenvolumen besitzt, das mindestens 20 Volumen-%, vorzugsweise mindestens 30 Volumen-% entspricht.

18. Verfahren nach einem beliebigen der Ansprüche 16 oder 17, **dadurch gekennzeichnet, dass** die Schicht aus einer Zwischenschichtzusammensetzung im Laufe des Schrittes a) auf mindestens eine Hauptfläche eines Substrats aus Kunststoff- oder Mineralglas aufgebracht wird, und dass eine Schicht aus einem polymerartigen Material im Laufe des Schrittes c) mittels Tauchbeschichtung oder Zentrifugation auf der porösen Zwischenschicht gebildet wird.

**Claims**

1. An optical article comprising an organic or mineral glass substrate, a layer of a polymeric material, and an intermediate layer having antistatic properties in direct contact with a main face of the substrate and the layer of polymeric material, **characterized in that** the intermediate layer comprises a mixture of colloidal particles of at least one electrically conductive colloidal metal oxide, of colloidal particles of non conductive mineral oxides having a refractive index of 1.55 or less and optionally of a binder, in such proportions that the mass of electrically conductive colloidal metal oxide particles represents 50 to 97% of the total weight of colloidal particles present in the intermediate layer, said intermediate layer being an initially porous layer, the pores of which have been filled either with material of the layer of polymeric material or with material of the substrate if the latter is made of an organic glass, so that the intermediate layer, after the initial porosity thereof has been filled, verifies the characteristics given by the following relationships:

$$0.725 \times \frac{\lambda}{4n} \le e \le 1.35 \times \frac{\lambda}{4n} \qquad (1)$$

$$0.98 \times \sqrt{n_{substrate} . n_{polymer}} \le n \le 1.02 \times \sqrt{n_{substrate} . n_{polymer}} \qquad (2)$$

wherein n is the refractive index of the intermediate layer, $n_{substrate}$ is the refractive index of the substrate, $n_{polymer}$ is the refractive index of the layer of polymeric material in direct contact with the intermediate layer, e is the thickness of the intermediate layer and $\lambda$ is set at 550 nm.

2. An optical article according to claim 1, wherein the weight of electrically conductive colloidal metal oxide particles represents 50 to 95%, more preferably 60 to 95%, and even more preferably 60 to 90% of the total weight of colloidal particles present in the intermediate layer.

3. An optical article according to claim 1 or 2, which comprises an intermediate layer verifying the following equation:

$$0.8 \times \frac{\lambda}{4n} \le e \le 1.2 \times \frac{\lambda}{4n} \qquad (1')$$

4. An optical article according to any preceding claim, which comprises an intermediate layer verifying the following equation:

$$0.985 \times \sqrt{n_{substrate} \cdot n_{polymer}} \leq n \leq 1.015 \times \sqrt{n_{substrate} \cdot n_{polymer}} \qquad (2')$$

5. An optical article according to any preceding claim, which comprises an intermediate layer with a porosity of less than 20% by volume, preferably of less than 10% by volume, more preferably of less than 5% by volume.

6. An optical article according to any preceding claim, which comprises an intermediate layer, the thickness of which ranges from 60 to 130 nm, preferably from 75 to 110 nm, more preferably from 80 to 100 nm.

7. An optical article according to any preceding claim, wherein the colloidal particle size varies from 10 to 80 nm, preferably from 30 to 80 nm, more preferably from 30 to 60 nm.

8. An optical article according to any preceding claim, wherein the electrically conductive, colloidal metal oxide is selected from tin-doped indium oxide, antimony-doped tin oxide, tin oxide, zinc oxide, indium oxide, vanadium pentoxide, aluminium-doped zinc oxide, cerium oxide, zinc antimonate, indium antimonate and antimony oxide.

9. An optical article according to any preceding claim, wherein the colloidal mineral oxide having a refractive index of 1.55 or less is selected from silica, silica doped with alumina and porous or hollow mineral oxides.

10. An optical article according to claim 9, wherein the colloidal mineral oxide having a refractive index of 1.55 or less is a porous or hollow mineral oxide having a refractive index ranging from 1.15 to 1.40.

11. An optical article according to any preceding claim, which has a light transmittance factor in the visible range (Tv) higher than 85%, more preferably higher than 90% and even more preferably higher than 91%.

12. An optical article according to any preceding claim, wherein the layer of polymeric material in direct contact with the intermediate layer is selected from a layer of an adhesion and/or impact-resistant primer coating, a layer of an anti-abrasion and/or scratch-resistant coating, a layer of an anti-reflection coating and a layer of an adhesive composition.

13. An optical article according to anyone of claims 1 to 11, wherein the porosity of the intermediate layer is filled with the polymeric material of a layer of an adhesion and/or impact-resistant primer coating.

14. An optical article according to any preceding claim, wherein the substrate is an ophthalmic lens.

15. An optical article according to any preceding claim, wherein the refractive index difference between the substrate and the layer of polymeric material is of 0.01 or more, preferably 0.02 or more, more preferably 0.05 or more, and even more preferably 0.1 or more.

16. A method of manufacturing an optical article according to any one of claims 1 to 15, comprising the steps of:

a) depositing a layer of an intermediate layer composition on at least one main surface of an organic or mineral glass substrate, or on a layer of a polymeric material, said composition comprising a mixture of colloidal particles of at least one electrically conductive colloidal metal oxide, of colloidal particles of non conductive mineral oxides having a refractive index of 1.55 or less and optionally of a binder;
b) drying the intermediate layer composition so as to form an initially porous intermediate layer;
c) forming onto this porous intermediate layer either a layer of a polymeric material, or an organic glass substrate, so that the initial porosity of the intermediate layer be filled either with material of the polymeric layer, or with material of the substrate if the latter is made of an organic glass, and so that the intermediate layer, after the initial porosity thereof has been filled, verifies equations (1) and (2) of claim 1,
d) recovering an optical article comprising an intermediate layer having antistatic properties in direct contact with a main surface of the substrate and the layer of polymeric material, the weight of electrically conductive colloidal metal oxide particles representing 50 to 97% of the total weight of colloidal particles present in the intermediate layer.

17. The method of claim 16, wherein the layer obtained in step b) has a porosity of at least 20% by volume, preferably of at least 30% by volume.

18. The method of any one of claims 16 or 17, wherein the layer of intermediate layer composition is deposited onto at least one main face of an organic or mineral glass substrate during step a) and a layer of a polymeric material is formed onto the porous intermediate layer by dip coating or spin coating during step c).

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03056366 A
- US 6852406 B
- US 20040209007 A
- US 20020114960 A
- JP 2006095997 A
- WO 2006095469 A
- JP 2001233611 A
- WO 0037359 A
- JP 2003222703 A
- US 6211274 B
- WO 2008015364 A
- US 5015523 A
- US 5619288 A
- JP 631417001 B
- JP 63087223 A
- EP 040411 A
- US 5316791 A
- FR 2790317
- WO 9410230 A
- US 4211823 A
- EP 614957 A
- FR 2858420
- EP 0614957 A

**Littérature non-brevet citée dans la description**

- **OWENS D.K. ; WENDT R.G.** Estimation of the surface force energy of polymers. *J. APPL. POLYM. SCI.,* 1969, vol. 13, 1741-1747